# FASCICULE DE BREVET EUROPEEN

(11) **EP 3 003 763 B1**
(45) Date de publication et mention de la délivrance du brevet: **16.05.2018**
(21) Numéro de dépôt: 14731688.9
(22) Date de dépôt: 20.05.2014
(51) Int. Cl.: B60K 17/10, F16H 61/472, F04B 1/32, F04B 1/24, F03C 1/06

(54) **PROCÉDÉ ET DISPOSITIF DE CONTRÔLE/COMMANDE D'UN MODULE HYDRAULIQUE POUR VÉHICULE HYBRIDE**
VERFAHREN UND VORRICHTUNG ZUR STEUERUNG EINES HYDRAULIKMODULS FÜR EIN HYBRIDFAHRZEUG
METHOD AND DEVICE FOR CONTROLLING/COMMANDING A HYDRAULIC MODULE FOR A HYBRID VEHICLE

(30) Priorité: 30.05.2013 FR 1354914
(43) Date de publication de la demande: 13.04.2016
(73) Titulaire: Technoboost, 75116 Paris (FR)
(72) Inventeur: ROUSS, Vicky, F-92800 Puteaux (FR); GIANNONI, Marc, F-75009 Paris (FR); WASCHEUL, Michael, F-78260 Achères (FR)
(74) Mandataire: Rosenberg, Muriel Sylvie
(86) Numéro de dépôt international: PCT/FR2014/051163
(87) Numéro de publication internationale: WO 2014/191654

(56) Documents cités:
- WO-A1-86/00662
- WO-A1-2012/050446
- DE-A1- 2 848 595
- DE-A1- 19 639 732
- US-A1- 2009 274 564

## Description

L'invention porte sur un procédé et un dispositif de contrôle/commande d'un module hydraulique équipant un véhicule automobile hybride hydraulique, le module hydraulique contenant au moins un moteur hydraulique. Un tel procédé et dispositif est connu du WO-A-2012/050446.

Un véhicule hybride hydraulique se différencie d'un véhicule hybride électrique par sa source de puissance hydraulique en lieu et place d'une source de puissance d'origine électrique. Dans un véhicule hybride hydraulique, la boîte de vitesses classique est remplacée ou complétée par un circuit hydraulique fermé.

Une source d'énergie rotative, fréquemment un moteur thermique voire électrique, entraîne une ou plusieurs pompes hydrauliques volumétriques, de préférence à cylindrée variable de haute précision. La pompe hydraulique transforme l'énergie mécanique en énergie hydraulique. Cette énergie est stockée dans un ou des accumulateurs haute pression et est ensuite restituée dans le ou les moteurs hydrauliques du module pour propulser le véhicule.

Il existe plusieurs types d'architecture pour des transmissions hybrides hydrauliques se divisant principalement en trois groupes:
- une architecture dite série,
- une architecture dite parallèle, et
- une architecture dite à dérivation, la dérivation de puissance mettant en oeuvre un ou plusieurs trains épicycloïdaux.

Une transmission de type série, remplace complètement l'architecture de la transmission classique : elle comporte une liaison hydraulique entre le moteur thermique et la roue.

Avec une transmission de type parallèle, le système hydraulique vient en général se greffer sur la transmission classique du véhicule en ayant comme rôle d'optimiser le système initial.

La transmission de type à dérivation est une architecture mixte permettant d'obtenir une transmission série ou parallèle.

La pompe ou le moteur hydraulique, en fonction du sens de rotation et de son utilisation, utilisé pour de telles transmissions, est souvent une pompe volumétrique à pistons, notamment des pompes à pistons axiaux en ligne avec un barillet tournant.

L'autre famille de pompes volumétriques aussi utilisée est celle des pompes à pistons radiaux. Dans une pompe volumétrique, le fluide est isolé dans une chambre à volume variable pour être transféré de la zone d'aspiration à basse pression vers la zone de refoulement à haute pression. Ce type de pompe est dit volumétrique car la pompe véhicule un volume de fluide à chaque tour de fonctionnement : ce volume par tour de fonctionnement est appelé cylindrée.

Il est connu également une technologie dite à cylindres flottants permettant d'obtenir des rendements mécanique et hydraulique supérieurs à ceux atteints par les technologies de pompes conventionnelles. Cette technologie permet un gain de place acquis grâce à l'intégration du différentiel à l'intérieur d'un moteur hydraulique, ce qui procure un module hydraulique compact.

Pour une hybridation hydraulique de type série, cette intégration supprime le couple pignon/couronne de différentiel. Ainsi, un module hydraulique unique servira de différentiel et de pompe hydraulique. Ceci permet de gagner de la place sous le capot du véhicule automobile et aussi de simplifier l'architecture hybride hydraulique. On utilise les mêmes roulements de paliers de différentiel et d'arbre de support de moteur hydraulique.

Cependant un tel module hydraulique compact nécessite une régulation particulière afin d'atteindre les performances attendues en termes de maîtrise du couple aux roues du véhicule ce qui implique de connaître la position de référence du module hydraulique et ses paramètres de fonctionnement.

Par conséquent, le problème à la base de l'invention est de concevoir un procédé et un dispositif de régulation qui puissent permettre un fonctionnement optimal d'un module hydraulique compact du type précédemment décrit en garantissant notamment la transmission d'un couple moteur adéquat aux roues motrices du véhicule, l'adaptation du couple devant être effectuée le plus rapidement possible.

Pour atteindre cet objectif, il est prévu selon l'invention un procédé de contrôle/commande d'un module hydraulique équipant un véhicule automobile hybride, le module hydraulique comprenant au moins un moteur hydraulique entraînant un différentiel intégré dans le module hydraulique, le moteur comprenant au moins un piston et un cylindre avec l'un de ces deux éléments étant un élément flottant, le moteur étant raccordé à un circuit hydraulique sélectivement à basse pression ou à haute pression, le moteur hydraulique convertissant l'énergie provenant du fluide sous pression en énergie mécanique sous la forme d'un couple d'entraînement du différentiel le transmettant aux roues motrices du véhicule, lequel procédé effectue, sur une demande de consigne de couple du module hydraulique émise par le contrôle/commande du groupe motopropulseur, une régulation de couple du moteur hydraulique caractérisé en ce que la régulation du couple s'effectue selon les valeurs de pression haute et basse du circuit hydraulique et selon la position angulaire du module hydraulique, cette régulation s'effectuant par pilotage de la pression dans le circuit hydraulique.

L'effet technique est d'obtenir, en se basant sur l'information des capteurs pressions haute et basse du circuit hydraulique et du capteur de position angulaire du module hydraulique, une régulation du couple par la maîtrise du couple au niveau du module hydraulique empêchant notamment des sauts de couple non désirés aux roues motrices, ce qui permet de renforcer le confort de la conduite du véhicule automobile et de respecter les critères de bruyance.

Avantageusement, à partir de la position angulaire, il est effectué l'étape d'estimation de la vitesse angulaire et, en fonction des caractéristiques géométriques du module hydraulique avec, d'une part, cette estimation de la vitesse angulaire et, d'autre part, la différence de pression haute et basse, il est effectué respectivement l'étape de calcul du débit de fluide et l'étape d'estimation du couple de sortie du module hydraulique suivie de l'étape d'asservissement du couple du module hydraulique.

Avantageusement, l'étape d'asservissement du couple se fait selon une régulation PID, une régulation cascade ou une régulation par un retour d'état, avec émission d'une consigne de pilotage de la différence de pression du circuit hydraulique.

Avantageusement, sur une demande d'apprentissage de la position de référence du module hydraulique émise par le contrôle/commande du groupe motopropulseur, il est effectué une étape d'apprentissage de la position de référence du module hydraulique avec émission d'un indicateur d'apprentissage signifiant si l'apprentissage est en cours ou non.

Avantageusement, il est déterminé un indicateur de l'état du module hydraulique en fonction du calcul du débit de fluide, de l'estimation du couple de sortie et de l'indicateur d'apprentissage ainsi qu'un indicateur d'activation ou désactivation de la régulation en couple du module hydraulique signifiant si l'activation de la régulation est en cours ou non, l'indicateur d'activation tenant compte de l'indicateur de l'état du module hydraulique, de la tension de la batterie et de l'autorisation d'activation du contrôle du module hydraulique.

Avantageusement, le procédé comprend une étape de gestion de diagnostic centralisant les dysfonctionnements du module hydraulique, chaque dysfonctionnement étant représenté par un indicateur de défaut.

Avantageusement, les indicateurs de défaut concernent respectivement la dérive excessive de la position de référence du module hydraulique, un écart excessif entre consigne de couple et couple réel, une incohérence entre consigne de couple et indicateur de l'état du module hydraulique.

L'invention concerne aussi un dispositif de contrôle/commande d'un module hydraulique équipant un véhicule automobile hybride pour la mise en oeuvre d'un tel procédé, lequel dispositif comprend une unité de contrôle/commande du module hydraulique connectée en émission et en réception avec le contrôle/commande du groupe motopropulseur, le dispositif comprenant un capteur de position angulaire du module hydraulique et des capteurs de pression haute et basse dans le circuit hydraulique du module hydraulique, les capteurs délivrant les valeurs respectives de position angulaire et de pression relevées à l'unité de contrôle/commande du module hydraulique, le dispositif comprenant une unité de contrôle/commande de la pression hydraulique pour la régulation du couple du module hydraulique.

Avantageusement, l'unité de contrôle/commande du module hydraulique comprend une unité de gestion de la vitesse angulaire du module hydraulique avec une sous-unité de calcul de la position angulaire du module hydraulique à partir des valeurs de position angulaire délivrées par le capteur de position angulaire, une unité d'apprentissage de la position de référence du module hydraulique, une unité de gestion des conditions d'activation de la régulation du couple du module hydraulique avec une première sous-unité d'estimation du couple et de calcul du débit dans le module hydraulique, une seconde sous-unité de détection de l'état du module hydraulique et une troisième sous-unité de conditions d'activation de l'unité de contrôle/commande du module hydraulique, une unité de régulation du couple et une unité de diagnostic.

L'invention concerne enfin un véhicule hybride hydraulique comportant au moins un module hydraulique compact, caractérisé en ce que le module hydraulique est contrôlé/commandé conformément à un tel procédé ou comprend un tel dispositif de contrôle/commande.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 illustre le dessin en coupe longitudinale d'un mode de réalisation d'un module hydraulique pouvant être commandé conformément à un procédé selon l'invention,
- la figure 2 est une représentation des unités principales d'un dispositif de contrôle/commande selon la présente invention en liaison avec un contrôle/commande de groupe motopropulseur du véhicule automobile,
- la figure 3 est une représentation des diverses unités d'un dispositif de contrôle/commande selon la présente invention.

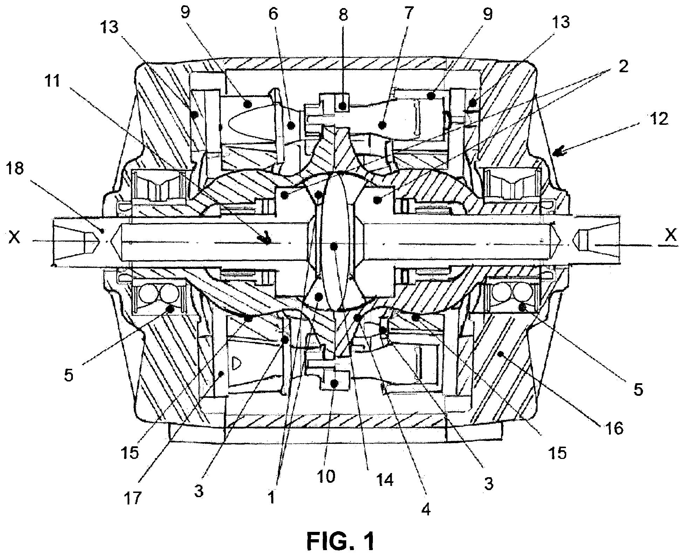

En se référant à la figure 1, le mode de réalisation d'un module hydraulique 12 compact pouvant être commandé conformément à un procédé selon l'invention comprend un carter 16 dans lequel est logé un moteur hydraulique 11 et, également logé dans le même carter 16, un différentiel dont les arbres de sortie 18 sont couplés aux roues motrices du véhicule.

Le différentiel comporte un boîtier 4 contenant des pignons satellites 1 coopérant avec des pignons planétaires 2, solidaires des arbres de sortie du différentiel, couplés aux roues motrices du véhicule, ces roues étant non représentées. Les extrémités libres de l'axe du porte satellite 14 sont solidairement liées au boîtier du différentiel.

Les pignons satellites 1 coopèrent avec les pignons planétaires 2 pour distribuer le couple vers les arbres de sortie. Le différentiel est monté en rotation à l'intérieur du moteur hydraulique, et l'axe de rotation XX' du moteur hydraulique 11 est confondu avec l'axe de rotation du différentiel.

Le boîtier du différentiel comporte deux demi-boîtiers présentant chacun un flasque. Les deux flasques sont fixés solidairement entre eux, notamment par boulonnage, rivetage ou sertissage, et définissent le plateau commun à des premier et second sous-ensembles du moteur hydraulique, gauche respectivement droit, disposés de part et d'autre du plateau commun et centrés sur l'axe de rotation du différentiel. Il est disposé au centre du carter 16 du module hydraulique ; le plateau commun s'étendant suivant un plan perpendiculaire au plan par lequel passe l'axe de rotation du moteur hydraulique 11.

Le plan de jonction 10 des deux flasques définit un plan de symétrie vertical du différentiel, du moteur hydraulique 11 et par conséquent, du module hydraulique 12. Les composants des premier et second sous-ensembles du moteur hydraulique 11 sont identiques et disposés symétriquement par rapport au plan de jonction des deux flasques.

Chaque sous-ensemble du moteur hydraulique 11 comporte une série de pistons gauche 6, respectivement droit 7, dont les premières extrémités sont fixées au plateau commun et dont les secondes extrémités sont reçues à coulissement dans un ensemble de cylindres flottants supportés par une plaque support 17. D'une manière générale, le moteur comprend au moins un piston et un cylindre avec l'un de ces deux éléments étant un élément flottant, le moteur étant raccordé à un circuit de fluide hydraulique.

La plaque support 17 est plaquée contre une glace de distribution, elle-même en appui sur la paroi interne du carter 16 du module hydraulique. La paroi sur laquelle sont plaqués le barillet et la glace de distribution est inclinée par rapport au plan de jonction des deux flasques d'un angle déterminé non nul, de l'ordre de 15° à 22°. Les cylindres flottants comportent des chemises recevant à coulissement respectivement les secondes extrémités des pistons.

Le fond des chemises comporte un orifice assurant une communication avec la glace de distribution, au travers de la plaque support, pour le passage du fluide en mode aspiration, soit à basse pression, ou en en mode refoulement, soit à haute pression du moteur hydraulique 11.

Une plaque de maintien axial 3 des cylindres flottants est disposée sur la face ouverte des cylindres, la plaque de maintien 3 étant munie d'ouvertures venant en regard des ouvertures des chemises des cylindres. Chaque demi-boîtier du différentiel comporte une extension cylindrique centrée sur l'axe de rotation du moteur hydraulique 11 qui s'étend suivant une direction opposée au flasque.

Cette extension définit un arbre du moteur hydraulique 11 comportant un logement interne recevant un des arbres de sortie 18 du différentiel solidaire du pignon planétaire. Chaque arbre du moteur hydraulique 11 comporte un premier épaulement définissant une première portée cylindrique sur laquelle est monté un palier 5, notamment un roulement à billes, par exemple à rouleaux coniques ou butée combinée à un palier, permettant de supporter l'arbre du moteur hydraulique 11 en rotation dans le carter 16 du module hydraulique.

Chaque demi-boîtier est conformé pour présenter une portée rotulaire recevant un joint homocinétique à billes à centre fixe 15 du type à bille, à tripode ou autre, voire coulissant, supportant et entraînant en rotation la glace de distribution, la plaque support, les cylindres flottants et la plaque de maintien.

Le module hydraulique est ainsi constitué d'un différentiel classique intégré à l'intérieur d'un moteur hydraulique 11 à pistons fixes et cylindres flottants (floating-cup). Le moteur hydraulique 11 comporte deux sous-ensembles qui sont symétriques par rapport au plan de jonction 10. Chaque sous-ensemble (gauche et droit) comporte un ensemble de pistons fixes gauche 6 et droit 7, un ensemble de cylindres flottants gauche et droit 9, un plateau fixe 8 commun aux deux sous-ensembles droit et gauche du moteur et qui fait partie du boîtier du différentiel 4. Les cylindres flottants gauche et droit 9 sont supportés par des pièces 13 solidarisées au carter 16.

Le moteur hydraulique 11 transforme le débit/pression hydraulique des accumulateurs et/ou de la pompe en couple mécanique. Le couple produit par le moteur 11 est appliqué au plateau fixe 8. L'effort de compression des pistons se décompose en une poussée axiale et une poussée radiale sur le plan incliné de la plaque support et des glaces. Cet effort est transmis, à travers l'axe du porte satellite 14, aux pignons satellites 1 et par la suite, aux pignons planétaires 2 qui sont solidaires des roues (non représentées).

A ce stade, on retrouve le fonctionnement d'un différentiel classique. Deux cas de figure peuvent se présenter :
- dans un premier cas de figure, les deux arbres de sortie, reliés respectivement aux roues, tournent à la même vitesse : l'effort de rotation est donc réparti équitablement et les pignons satellites ne tournent pas.
- dans un second cas de figure, les deux arbres de sortie ne tournent pas à la même vitesse : les pignons satellites sont alors entraînés et transfèrent une rotation supplémentaire à l'arbre de roue qui tourne alors à une vitesse supérieure.

Ainsi, la boîte de vitesses classique et la couronne du différentiel sont remplacées par un moteur hydraulique qui produit un couple à partir de la pression hydraulique stockée dans les accumulateurs ou fournie par une ou plusieurs pompes et l'applique directement au boîtier du différentiel.

La présente invention concernant un procédé et un dispositif de contrôle/commande est applicable quel que soit le nombre de pistons dans le moteur/pompe hydraulique et le nombre de satellites dans le différentiel. Elle peut s'appliquer également à d'autres technologies de pompes comme les pompes à pistons radiaux. Elle est applicable pour des différentiels avant et/ou des différentiels arrière pour des véhicules à deux roues motrices et des différentiels centraux pour des véhicules à quatre roues motrices. Elle est applicable quel que soit le type de joint homocinétique utilisé.

Dans une variante, le module hydraulique selon l'invention peut comporter un différentiel avec une couronne au cas où l'on veut ajouter à la transmission hydrostatique une boîte de vitesses classique avec un ou plusieurs rapports. Dans ce cas, la boîte de vitesses classique transmet le couple au différentiel par la couronne du différentiel et le moteur hydraulique transmet le couple au différentiel par le boîtier du différentiel.

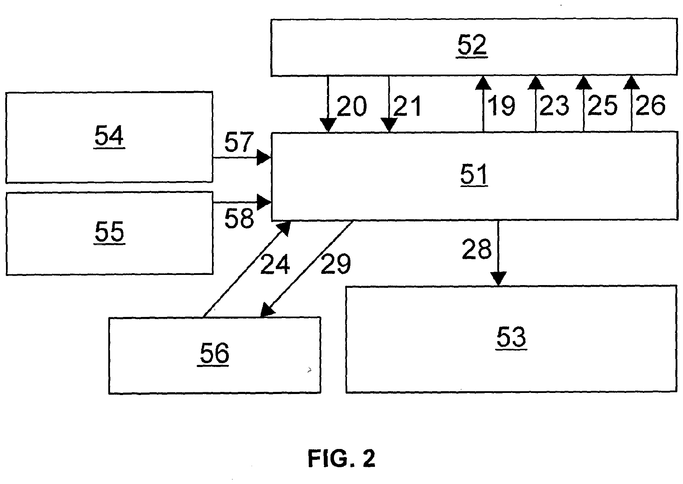

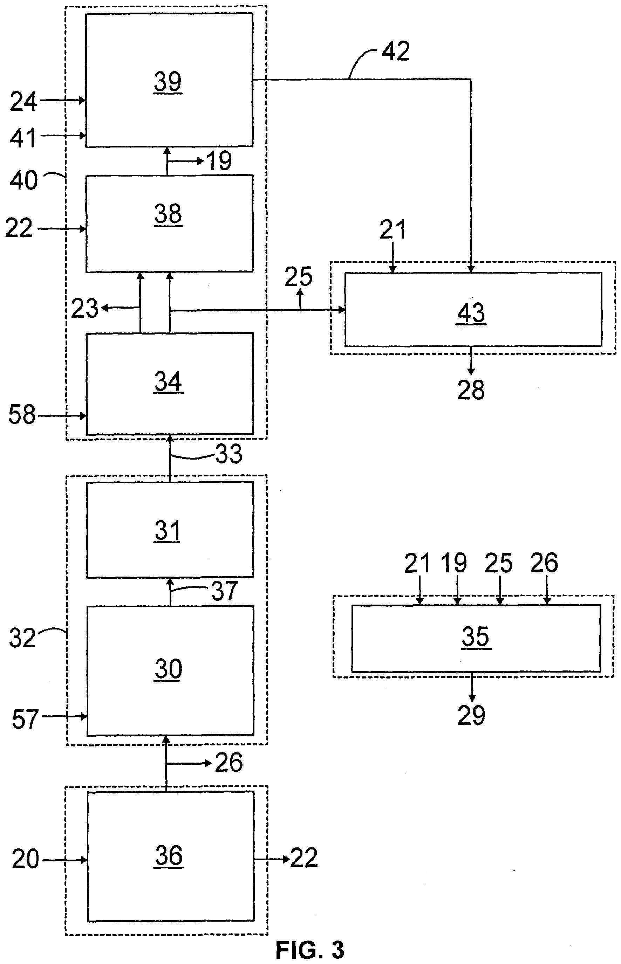

Les figures 2 et 3 montrent un procédé et un dispositif de contrôle/commande associés au module hydraulique précédemment décrit lui permettant d'accomplir les prestations requises et de garantir le couple aux roues du véhicule.

A la figure 2, ce dispositif de contrôle/commande comporte une régulation du couple demandé au module hydraulique effectué principalement par l'unité de contrôle/commande 51 du module hydraulique en se basant sur l'information des capteurs pressions 55 haute et basse du circuit hydraulique et du capteur de position 54 angulaire du module hydraulique. Ces capteurs 54 et 55 envoient vers l'unité de contrôle/commande 51 du module hydraulique les valeurs relevées respectivement de position angulaire 57 et de pression 58.

Il est à noter qu'il peut être utilisé tout type de capteur de position angulaire du module hydraulique par exemple un capteur à effet hall ou un capteur résistif. Il en va de même pour les capteurs de pression du circuit hydraulique.

A la figure 2, il est visible deux ensembles 53, 56 coopérant avec l'unité de contrôle/commande 51 du module hydraulique, ces ensembles faisant partie des sous-systèmes compris dans le dispositif de contrôle/commande selon la présente invention. Ces sous-systèmes seront plus amplement décrits en regard de la figure 3. Les deux ensembles sont un ensemble de contrôle/commande de la pression hydraulique 53 du module hydraulique et un ensemble de gestion de diagnostic 56.

L'unité de contrôle/commande 51 du module hydraulique envoie vers l'ensemble de contrôle/commande de la pression hydraulique 53 une consigne de différence de pression basse et haute 28. L'unité de contrôle/commande 51 du module hydraulique envoie vers l'ensemble de gestion de diagnostic 56 une autorisation d'activation du contrôle 24 du module hydraulique et reçoit en retour un indicateur de défauts 29.

L'unité de contrôle/commande 51 du module hydraulique coopère en émission comme en réception avec le contrôle/commande du groupe motopropulseur 52 équipant classiquement un véhicule automobile. Le contrôle/commande du groupe motopropulseur 52 peut envoyer à l'unité de contrôle/commande 51 du module hydraulique une consigne de couple 21 du module hydraulique.

Le contrôle/commande du groupe motopropulseur 52 peut aussi envoyer à l'unité de contrôle/commande 51 du module hydraulique une demande d'apprentissage 20 de la position de référence du module hydraulique. Cette demande est accomplie par l'unité d'apprentissage de la position de référence du module hydraulique, non visible à cette figure 2 mais référencée 36 à la figure 3.

Le résultat de l'apprentissage de la position de référence du module hydraulique est communiqué en retour au contrôle/commande du groupe motopropulseur 52 par le flux 26 partant de l'unité de contrôle/commande 51 du module hydraulique.

Pendant toute la durée de l'apprentissage, le booléen ou indicateur d'apprentissage signifiant que l'apprentissage de la position de référence du module hydraulique est en cours passe puis reste à 1 et l'état du module hydraulique est qualifié être « en cours d'apprentissage ».

L'unité de contrôle/commande 51 du module hydraulique envoie en retour au contrôle/commande du groupe motopropulseur 52 un état de référence 19 du module hydraulique, un débit estimé du fluide hydraulique 23 dans le module hydraulique et le couple estimé 25 du module hydraulique.

A la figure 3, il peut être vu que le dispositif de contrôle/commande du module hydraulique comprend en outre cinq unités 32, 35, 36, 40 et 43, dont certaines 32, 40 font partie de l'unité de contrôle/commande 51 du module hydraulique montrée à la figure 2, ces unités effectuant les étapes ou sous-étapes du procédé de contrôle/commande selon la présente invention.

La première unité est l'unité de gestion de la vitesse angulaire 32 du module hydraulique. La seconde unité est l'unité d'apprentissage de la position de référence 36 du module hydraulique. La troisième unité est l'unité de gestion des conditions d'activation de la régulation en couple 40 du module hydraulique. Les quatrième et cinquième unités sont l'unité de régulation et d'asservissement du couple 43 du module hydraulique et l'unité de diagnostic 35, apparentée avec l'ensemble de gestion de diagnostic 56 montré à la figure 2.

L'unité de gestion de la vitesse angulaire 32 du module hydraulique comprend une sous-unité de calcul de la position angulaire 30 du module hydraulique. Cette sous-unité 30 permet de traduire la tension fournie par le signal 57 en provenance du capteur de position angulaire, référencé 54 à la figure 2, en position angulaire normalisée 37 en tenant compte de la valeur apprise de la position de référence 26 du module hydraulique par l'unité d'apprentissage de la position de référence 36 du module hydraulique.

L'unité de gestion de la vitesse angulaire 32 du module hydraulique comprend aussi une sous-unité d'estimation de la vitesse angulaire 31 du module hydraulique. Cette sous-unité 31 permet d'estimer la vitesse angulaire 33 du module hydraulique à partir de la position angulaire normalisée 37 du module hydraulique en provenance de la sous-unité de calcul de la position angulaire 30, ceci essentiellement par dérivation.

L'unité d'apprentissage de la position de référence 36 du module hydraulique permet d'apprendre la position de référence du module hydraulique dans l'usine terminale, en après-vente et durant la vie du véhicule suite à la demande d'apprentissage 20 envoyée par le dispositif contrôle/commande du groupe motopropulseur, référencé 52 à la figure 2. Durant toute la durée de l'apprentissage, le booléen ou indicateur d'apprentissage 22 de la position de référence du module hydraulique vaut 1. A la fin de l'apprentissage, cet indicateur d'apprentissage 22 repasse à 0.

L'unité de gestion des conditions d'activation de la régulation en couple 40 du module hydraulique est composée de trois sous-unités qui sont la sous-unité de calcul du couple et du débit 34 du module hydraulique, la sous-unité de détection de l'état 38 du module hydraulique et la sous-unité des conditions d'activation du contrôle/commande 39 du module hydraulique.

La sous-unité du calcul du couple et du débit 34 du module hydraulique permet d'utiliser les valeurs de pressions haute et basse 58 mesurées du circuit hydraulique fournies par les capteurs de pression pour calculer une différence de pression ΔP. Le couple estimé 25 du module hydraulique est calculé en se basant sur la différence de pression ΔP mesurée et des caractéristiques géométriques connues du module hydraulique, notamment la cylindrée.

Le débit estimé 23 du module hydraulique est également calculé en se basant sur la vitesse angulaire 33 du module hydraulique et des caractéristiques géométriques connues du module hydraulique, notamment la cylindrée. Le débit estimé 23 et le couple estimé 25 sont envoyés à la sous-unité de détection de l'état 38, le couple estimé 25 étant aussi envoyé à l'unité d'asservissement de couple 43.

La sous-unité de détection de l'état 38 du module hydraulique en fonction du couple estimé 25 et du débit calculé 23 du module hydraulique, de l'indicateur d'apprentissage 22 signifiant que l'apprentissage de la position de référence du module hydraulique est en cours, élabore un indicateur de l'état 19, en cours d'apprentissage ou disponible du module hydraulique.

La sous-unité des conditions d'activation du contrôle/commande 39 du module hydraulique élabore un booléen d'activation/désactivation ou indicateur d'activation/désactivation de la régulation en couple 42 du module hydraulique en fonction de l'indicateur de l'état 19, de la tension batterie 41 et de l'autorisation d'activation du contrôle/commande 24 du module hydraulique.

L'unité de régulation et d'asservissement en couple 43 du module hydraulique peut être conçue autour d'un régulateur de couple disposant avantageusement de trois actions : proportionnelle, intégrale et dérivée. Ce type de régulateur connu sous le nom de régulateur PID est généralement suffisant pour ce type de régulation, ce qui n'est cependant pas limitatif. En alternative, il peut être utilisé d'autres formes de régulation de position telles que la régulation cascade, la régulation par un retour d'état, etc.

Il est élaboré une consigne de pilotage 28 pour piloter la différence de pression du circuit hydraulique de façon à réaliser la consigne de couple 21 envoyée à cette unité de régulation en couple 43.

L'unité de diagnostic 35 permet d'informer, par l'intermédiaire du gestionnaire de diagnostic, référencé 56 à la figure 2, des dysfonctionnements du module hydraulique par rapport à sa loi de contrôle/commande via un indicateur de défauts 29. Parmi les diagnostics possibles d'erreurs, il peut être cité une dérive excessive de la position de référence 26 du module hydraulique apprise, un écart excessif entre la consigne de couple 21 et le couple estimé 25 du module hydraulique, une incohérence entre la consigne de couple 21 et l'état du module hydraulique 19, etc.

Les phases de fonctionnement du module hydraulique se résument principalement à deux situations. La première est la régulation en couple du module hydraulique pendant un roulage du véhicule tandis que la seconde est l'apprentissage de la position de référence du module hydraulique.

En se référant aux figures 2 et 3, en ce qui concerne la régulation de couple, le contrôle/commande du groupe motopropulseur 52, envoie une consigne de couple 21 du module hydraulique à l'unité de contrôle/commande 51 du module hydraulique, ces éléments étant référencés à la figure 2. L'unité de contrôle/commande du module hydraulique, référencé 51 à la figure 2, s'assure que toutes les conditions d'activation de la régulation de couple sont réunies avec l'unité de gestion des conditions d'activation de la régulation en couple 40 du module hydraulique.

Les conditions d'activation sont avantageusement les suivantes :
- état du module hydraulique disponible, cet état étant transmis par l'indicateur de l'état 19, et
- tension de la batterie non critique, cette tension étant transmise par le flux 41. L'autorisation d'activation du contrôle/commande du module hydraulique, transmise par le flux 24, est donnée par le gestionnaire de diagnostic, référencé 56 à la figure 2.

Si ces conditions sont réunies, il est activé l'unité de régulation et d'asservissement en couple du module hydraulique 43 via l'indicateur d'activation/désactivation de la régulation en couple 42. L'unité de régulation et d'asservissement en couple 43 du module hydraulique se charge ensuite de réaliser le couple demandé selon la consigne de couple 21 envoyée par le contrôle/commande du groupe motopropulseur, référencé 22 à la figure 2.

Ceci est fait en élaborant une consigne de différence de pression 28 du circuit hydraulique en fonction de l'écart entre la consigne de couple 21 et le couple estimé 25 du module hydraulique. La consigne de différence de pression 28 du circuit hydraulique est transmise à l'ensemble de contrôle/commande de la pression du circuit hydraulique, référencé 53 à la figure 2.

En ce qui concerne l'apprentissage de la position de référence du module hydraulique faite dans l'unité d'apprentissage 36, le contrôle/commande du groupe motopropulseur, référencé 52 à la figure 2, envoie une demande d'apprentissage de la position de référence 20 du module hydraulique à l'unité de contrôle/commande du module hydraulique, référencée 51 à la figure 2.

Cette demande est réalisée par l'unité d'apprentissage de la position de référence 36 du module hydraulique. Le résultat de l'apprentissage, contenant principalement l'apprentissage de la position de référence du module hydraulique, est communiqué par le flux 26 à la fonction de gestion de la vitesse angulaire 32 du module hydraulique. Pendant toute la durée de l'apprentissage, l'indicateur booléen d'apprentissage de la position de référence 22 du module hydraulique passe et reste à 1 et l'état du module hydraulique 19 est qualifié être « en cours d'apprentissage ».

L'invention concerne aussi un véhicule hybride hydraulique comportant au moins un module hydraulique compact contrôlé/commandé conformément à un tel procédé ou comprend un dispositif de contrôle/commande tel que précédemment décrit.

Avantageusement, le véhicule hybride comporte deux modules hydrauliques accouplés par un système planétaire/satellite. Le couple transmis aux roues motrices est alors le couple produit par les deux modules ou par un seul des deux modules, selon le couple demandé par le conducteur. Ceci est valable pour une architecture de véhicule hybride hydraulique en série, en parallèle ou en dérivation.

Par exemple, quand un fort besoin de couple est requis, ceci pouvant se produire notamment au démarrage, les deux modules sont utilisés ensemble. Pour des besoins de couple moindres, un seul des deux modules pourra être actionné. Dans ce cas, il est avantageux de prévoir une alternance entre les modules hydrauliques afin que cela ne soit pas toujours le même module qui soit utilisé mais sélectivement un des deux modules afin de répartir l'usure sur les deux modules.

L'invention n'est nullement limitée aux modes de réalisation décrits et illustrés qui n'ont été donnés qu'à titre d'exemples.

## Revendications

1. Procédé de contrôle/commande d'un module hydraulique (12) équipant un véhicule automobile hybride, le module hydraulique (12) comprenant au moins un moteur hydraulique (11) entraînant un différentiel intégré dans le module hydraulique (12), le moteur (11) comprenant au moins un piston et un cylindre avec l'un de ces deux éléments étant un élément flottant, le moteur étant raccordé à un circuit hydraulique sélectivement à basse pression ou à haute pression, le moteur hydraulique (11) convertissant l'énergie provenant du fluide sous pression en énergie mécanique sous la forme d'un couple d'entraînement du différentiel le transmettant aux roues motrices du véhicule, lequel procédé effectue, sur une demande de consigne de couple (21) du module hydraulique (12) émise par le contrôle/commande du groupe motopropulseur (52), une régulation de couple du moteur hydraulique (11) **caractérisé en ce que** la régulation du couple s'effectue selon les différences de valeurs de pression haute et basse du circuit hydraulique et selon la position angulaire du module hydraulique autour de son axe de rotation (X), cette régulation s'effectuant par pilotage de la pression dans le circuit hydraulique.

2. Procédé selon la revendication 1, dans lequel, à partir de la position angulaire, il est effectué l'étape d'estimation de la vitesse angulaire et, en fonction des caractéristiques géométriques du module hydraulique (12) avec, d'une part, cette estimation de la vitesse angulaire et, d'autre part, la différence de pression haute et basse, il est effectué respectivement l'étape de calcul du débit de fluide et l'étape d'estimation du couple de sortie du module hydraulique (12) suivie de l'étape d'asservissement du couple du module hydraulique.

3. Procédé selon la revendication 2, dans lequel, l'étape d'asservissement du couple se fait selon une régulation PID, une régulation cascade ou une régulation par un retour d'état avec émission d'une consigne de pilotage de la différence de pression du circuit hydraulique.

4. Procédé selon la revendication 2 ou 3, dans lequel, sur une demande d'apprentissage de la position de référence du module hydraulique (12) émise par le contrôle/commande du groupe motopropulseur (52), il est effectué une étape d'apprentissage de la position de référence du module hydraulique (12) avec émission d'un indicateur d'apprentissage (22) signifiant si l'apprentissage est en cours ou non.

5. Procédé selon la revendication 4, dans lequel, il est déterminé un indicateur de l'état (19) du module hydraulique (12) en fonction du calcul du débit de fluide, de l'estimation du couple (25) de sortie et de l'indicateur d'apprentissage (22) ainsi qu'un indicateur d'activation (42) ou désactivation de la régulation en couple du module hydraulique (12) signifiant si l'activation de la régulation est en cours ou non, l'indicateur d'activation (42) tenant compte de l'indicateur de l'état (19) du module hydraulique (12), de la tension (41) de la batterie et de l'autorisation d'activation (24) du contrôle du module hydraulique (12).

6. Procédé selon la revendication 5, lequel comprend une étape de gestion de diagnostic centralisant les dysfonctionnements du module hydraulique (12), chaque dysfonctionnement étant représenté par un indicateur de défaut (29).

7. Procédé selon la revendication 6, pour lequel les indicateurs de défaut (29) concernent respectivement la dérive excessive de la position de référence (26) du module hydraulique, un écart excessif entre consigne de couple (21) et couple réel (25), une incohérence entre consigne de couple (21) et indicateur de l'état (19) du module hydraulique.

8. Dispositif de contrôle/commande d'un module hydraulique (12) équipant un véhicule automobile hybride pour la mise en oeuvre d'un procédé selon l'une quelconque des revendications précédentes, lequel comprend une unité de contrôle/commande (51) du module hydraulique connectée en émission et en réception avec le contrôle/commande du groupe motopropulseur (52), le dispositif comprenant un capteur de position angulaire (54) du module hydraulique (12) et des capteurs de pression (55) haute et basse dans le circuit hydraulique du module hydraulique (12), les capteurs (54, 55) délivrant les valeurs respectives de position angulaire et de pression relevées à l'unité de contrôle/commande (51) du module hydraulique, le dispositif comprenant une unité de contrôle/commande de la pression hydraulique (53) pour la régulation du couple du module hydraulique (12).

9. Dispositif de contrôle/commande selon la revendication 8, pour lequel l'unité de contrôle/commande du module hydraulique (51) comprend une unité de gestion de la vitesse angulaire du module hydraulique (32) avec une sous-unité de calcul de la position angulaire (30) du module hydraulique (12) à partir des valeurs de position angulaire (57) délivrées par le capteur de position angulaire (54), une unité d'apprentissage (36) de la position de référence du module hydraulique (12), une unité de gestion des conditions d'activation de la régulation du couple (40) du module hydraulique (12) avec une première sous-unité d'estimation du couple et de calcul du débit (34) dans le module hydraulique (12), une seconde sous-unité de détection de l'état (38) du module hydraulique (12) et une troisième sous-unité de conditions d'activation (39) de l'unité de contrôle/commande du module (51), une unité de régulation du couple (43) et une unité de diagnostic (35).

10. Véhicule hybride hydraulique comportant au moins un module hydraulique (12) compact, **caractérisé en ce que** le module hydraulique (12) est contrôlé/commandé conformément à un procédé selon l'une quelconque des revendications 1 à 7 ou comprend un dispositif de contrôle/commande selon l'une quelconque des revendications 8 ou 9.

## Patentansprüche

1. Verfahren zum Steuern/Regeln eines Hydraulikmoduls (12), das ein Hybridkraftfahrzeug ausstattet, wobei das Hydraulikmodul (12) mindestens einen Hydraulikmotor (11) umfasst, der ein Differenzial antreibt, das in dem Hydraulikmodul (12) integriert ist, wobei der Motor (11) mindestens einen Kolben und einen Zylinder aufweist, wobei eines dieser zwei Elemente ein gelagertes Element ist, wobei der Motor an einen Hydraulikkreislauf selektiv mit Niederdruck oder Hochdruck angeschlossen ist, wobei der Hydraulikmotor (11) die Energie, die von dem Fluid unter Druck kommt, in mechanische Energie in der Form eines Antriebsdrehmoments des Differenzials umwandelt, indem er es an die Antriebsräder des Fahrzeugs überträgt, wobei das Verfahren auf eine Solldrehmomentanfrage (21) des Hydraulikmoduls (12), die von der Steuerung/Regelung des Antriebsaggregat (52) ausgegeben wird, eine Drehmomentregelung des Hydraulikmoduls (11) ausführt, **dadurch gekennzeichnet, dass** die Regelung des Drehmoments gemäß den Hochdruck- und Niederdruckunterschieden des Hydraulikkreislaufs und gemäß der Winkelposition des Hydraulikmoduls um seine Drehachse (X) erfolgt, wobei diese Regelung durch Steuerung des Drucks in dem Hydraulikkreislauf erfolgt.

2. Verfahren nach Anspruch 1, wobei, ausgehend von der Winkelposition, ein Schätzungsschritt der Winkelgeschwindigkeit ausgeführt wird, und, in Abhängigkeit von den geometrischen Merkmalen des Hydraulikmoduls (12) mit, einerseits, dieser Schätzung der Winkelgeschwindigkeit und andererseits dem Hochdruck- und Niederdruckunterschied jeweils der Berechnungsschritt des Fluiddurchsatzes und der Schätzungsschritt Ausgangsdrehmoments des Hydraulikmoduls (12) gefolgt von dem Steuerschritt des Drehmoments des Hydraulikmoduls ausgeführt wird.

3. Verfahren nach Anspruch 2, wobei der Steuerschritt des Drehmoments gemäß einer PID-Regelung, einer Kaskadenregelung oder einer Regelung durch eine Zustandsrückmeldung mit Senden eines Steuersollwerts des Druckunterschieds des Hydraulikkreislaufs erfolgt.

4. Verfahren nach Anspruch 2 oder 3, wobei, auf eine Lernanfrage der Bezugsposition des Hydraulikmoduls (12), die von der Steuerung/Regelung des Antriebsaggregats (52) ausgegeben wird, ein Lernschritt der Bezugsposition des Hydraulikmoduls (12) mit Senden eines Lernindikators (22), der meldet, ob das Lernen läuft oder nicht, ausgeführt wird.

5. Verfahren nach Anspruch 4, wobei ein Indikator des Zustands (19) des Hydraulikmoduls (12) in Abhängigkeit von der Berechnung des Fluiddurchsatzes, der Schätzung des Ausgangsdrehmoments (45) und des Lernindikators (22) sowie eines Deaktivierungsindikators (42) oder Deaktivierungsindikators der Drehmomentregelung des Hydraulikmoduls (12) bestimmt wird, der meldet, ob das Aktivieren der Regelung läuft oder nicht, wobei der Aktivierungsindikator (42) den Zustand des Indikators (19) des Hydraulikmoduls (12), der Spannung (41) der Batterie und der Aktivierungsgenehmigung (24) der Steuerung des Hydraulikmoduls (12) berücksichtigt.

6. Verfahren nach Anspruch 5, das einen Diagnoseverwaltungsschritt umfasst, der die Funktionsstörungen des Hydraulikmoduls (12) zentralisiert, wobei jede Funktionsstörung durch einen Fehlerindikator (29) dargestellt wird.

7. Verfahren nach Anspruch 6, bei dem die Fehlerindikatoren (29) jeweils die übermäßige Drift der Bezugsposition (26) des Hydraulikmoduls, eine übermäßige Abweichung zwischen Drehmomentsollwert (21) und realem Drehmoment (25), eine Inkohärenz zwischen Drehmomentsollwert (21) und Indikator des Zustands (19) des Hydraulikmoduls betreffen.

8. Vorrichtung zur Steuerung/Regelung eines Hydraulikmoduls (12), das ein Hybridkraftfahrzeug ausstattet, zur Umsetzung eines Verfahrens nach einem der vorhergehenden Ansprüche, die eine Steuer-/Regeleinheit (51) des Hydraulikmoduls umfasst, die zum Senden und Empfangen mit der Steuerung/Regelung des Antriebsaggregats (52) verbunden ist, wobei die Vorrichtung einen Winkelpositionssensor (54) des Hydraulikmoduls (12) und Hochdruck- und Niederdrucksensoren (55) in dem Hydraulikkreislauf des Hydraulikmoduls (12) umfasst, wobei die Sensoren (54, 55) jeweilige Werte von Winkelposition und Druck liefern, die an der Steuer-/Regeleinheit (51) des Hydraulikmoduls erhoben werden, wobei die Vorrichtung eine Steuer-/Regeleinheit des Hydraulikdrucks (53) für die Regelung des Drehmoments des Hydraulikmoduls (12) umfasst.

9. Vorrichtung zur Steuerung/Regelung nach Anspruch 8, wobei die Steuer-/Regeleinheit des Hydraulikmoduls (51) eine Verwaltungseinheit der Winkelgeschwindigkeit des Hydraulikmoduls (32) mit einer Untereinheit zur Berechnung der Winkelposition (30) des Hydraulikmoduls (12) ausgehend von den Winkelpositionswerten (57), die von dem Winkelpositionssensor (54) geliefert werden, eine Lerneinheit (36) der Bezugsposition des Hydraulikmoduls (12), eine Verwaltungseinheit der Aktivierungsbedingungen der Regelung des Drehmoments (40) des Hydraulikmoduls (12) mit einer ersten Untereinheit zum Schätzen des Drehmoments und Berechnen des Durchsatzes (34) in dem Hydraulikmodul (12), eine zweite Untereinheit zum Erfassen des Zustands (38) des Hydraulikmoduls (12) und eine dritte Untereinheit von Aktivierungsbedingungen (39) der Steuer-/Regeleinheit des Moduls (51), eine Regeleinheit des Drehmoments (43) und eine Diagnoseeinheit (35) umfasst.

10. Hydraulisches Hybridfahrzeug, das mindestens ein kompaktes Hydraulikmodul (12) umfasst, **dadurch gekennzeichnet, dass** das Hydraulikmodul (12) gemäß einem Verfahren nach einem der Ansprüche 1 bis 7 gesteuert/geregelt ist, oder eine Steuer-/Regelvorrichtung nach einem der Ansprüche 8 oder 9 umfasst.

## Claims

1. A method for controlling/commanding a hydraulic module (12) equipping a hybrid motor vehicle, the hydraulic module (12) including at least one hydraulic engine (11) driving a differential integrated in the hydraulic module (12), the engine (11) including at least one piston and a cylinder with one of these two elements being a floating element, the engine being connected to a hydraulic circuit selectively at low pressure or at high pressure, the hydraulic engine (11) converting the energy originating from the fluid under pressure into mechanical energy in the form of a drive torque of the differential transmitting it to the drive wheels of the vehicle, which method carries out, at a torque setpoint request (21) of the hydraulic module (12) emitted by the control/command of the powertrain (52), a torque regulation of the hydraulic engine (11), **characterized in that** the regulation of the torque is carried out according to the differences in high and low pressure values of the hydraulic circuit and according to the angular position of the hydraulic module about its rotation axis (X), this regulation being carried out by controlling of the pressure in the hydraulic circuit.

2. The method according to Claim 1, in which, from the angular position, the step is carried out of estimation of the angular speed and, as a function of the geometric characteristics of the hydraulic module (12) with, on the one hand, this estimation of the angular speed and, on the other hand, the high and low pressure difference, the step is carried out respectively of calculation of the flow of fluid and the step of estimation of the output torque of the hydraulic module (12) followed by the slaving step of the torque of the hydraulic module.

3. The method according to Claim 2, in which, the slaving step of the torque is carried out according to a PID regulation, a cascade regulation or a regulation by a status return with emission of a controlling setpoint of the pressure difference of the hydraulic circuit.

4. The method according to Claim 2 or 3, in which, on a learning request of the reference position of the hydraulic module (12) emitted by the control/command of the powertrain (52), a learning step is carried out of the reference position of the hydraulic module (12) with emission of a learning indicator (22) signifying whether the learning is in progress or not.

5. The method according to Claim 4, in which an indicator is determined of the status (19) of the hydraulic module (12) as a function of the calculation of the flow of fluid, of the estimation of the output torque (25) and of the learning indicator (22) and also an indicator of activation (42) or deactivation of the torque regulation of the hydraulic module (12) signifying whether the activation of the regulation is in progress or not, the activation indicator (42) taking into account the indicator of the status (19) of the hydraulic module (12), of the voltage (41) of the battery and of the authorization of activation (24) of the control of the hydraulic module (12).

6. The method according to Claim 5, which includes a diagnostics management step centralizing the malfunctions of the hydraulic module (12), each malfunction being represented by a fault indicator (29) .

7. The method according to Claim 6, for which the fault indicators (29) concern respectively the excessive drift of the reference position (26) of the hydraulic module, an excessive deviation between torque setpoint (21) and actual torque (25), an inconsistency between torque setpoint (21) and indicator of the status (19) of the hydraulic module.

8. A control/command device of a hydraulic module (12) equipping a hybrid motor vehicle for the implementation of a method according to any one of the preceding claims, which includes a control/command unit (51) of the hydraulic module connected in emission and in reception with the control/command of the powertrain (52), the device including an angular position sensor (54) of the hydraulic module (12) and high and low pressure sensors (55) in the hydraulic circuit of the hydraulic module (12), the sensors (54, 55) delivering the respective values of angular position and of pressure taken at the control/command unit (51) of the hydraulic module, the device including a control/command unit of the hydraulic pressure (53) for the regulation of the torque of the hydraulic module (12).

9. The control/command device according to Claim 8, for which the control/command unit of the hydraulic module (51) includes a unit for management of the angular speed of the hydraulic module (32) with a sub-unit of calculation of the angular position (30) of the hydraulic module (12) from angular position values (57) delivered by the angular position sensor (54), a learning unit (36) of the reference position of the hydraulic module (12), a unit for management of the activation conditions of the regulation of the torque (40) of the hydraulic module (12) with a first sub-unit for estimation of the torque and for calculation of the flow (34) in the hydraulic module (12), a second sub-unit for detection of the status (38) of the hydraulic module (12) and a third sub-unit of activation conditions (39) of the control/command unit of the module (51), a unit for regulation of the torque (43) and a diagnostics unit (35).

10. A hybrid hydraulic vehicle comprising at least one compact hydraulic module (12), **characterized in that** the hydraulic module (12) is controlled/commanded in accordance with a method according to any one of Claims 1 to 7 or includes a control/command device according to any one of Claims 8 or 9.
